# EUROPEAN PATENT APPLICATION

(11) **EP 1 879 160 A1**
(43) Date of publication of application: **16.01.2008**
(21) Application number: 06117152.6
(22) Date of filing: 13.07.2006
(51) Int. Cl.: G09B 19/24

(54) **Virtual education system for mounter, and method for controlling the same**

(71) Applicant: Mirae Corporation, Chonan-si Chungchongnam-do (KR)
(72) Inventor: Jung, Yun Gi, Gyeonggi-do (KR); Kim, Young Joo, Mabuk-ri, Gunseong-eup, Gyeonggi-do (KR); Hwang, Heung Seon, Chungcheongnam-do (KR)
(74) Representative: Meissner, Bolte & Partner

(57) **Abstract**

A virtual education system for a mounter and a method for controlling the same are provided to teach users how to manipulate the mounter through virtual models (animation or simulation models) of the mounter so that they learn how to manipulate it through the same operation procedures and methods as the real ones of the mounter. A user manual containing structures and functions of elements of the mounter and operation procedures and methods thereof is provided. Virtual models representing contents of the user manual are produced to display corresponding configurations of the mounter. Specifically, virtual models representing items included in the user manual, which are associated with installation and startup of the mounter, respective structures and operations of the elements, manufacturing processes of the mounter for producing a product, and tasks in each manufacturing process, are produced to display corresponding configurations of the mounter on a screen.

## Description

### BACKGROUND OF THE INVENTION

### Field of the Invention

The present invention relates to a virtual education system for a mounter and a method for controlling the same, which teach users how to manipulate the mounter through virtual models (for example, animation or simulation models) of the mounter so that they learn how to manipulate the mounter through the same operation procedures and methods as the real ones of the mounter.

### Discussion of the Related Art

A mounter is a device that automatically mounts various parts such as chips, resistors, capacitors, and transistors on a given circuit board.

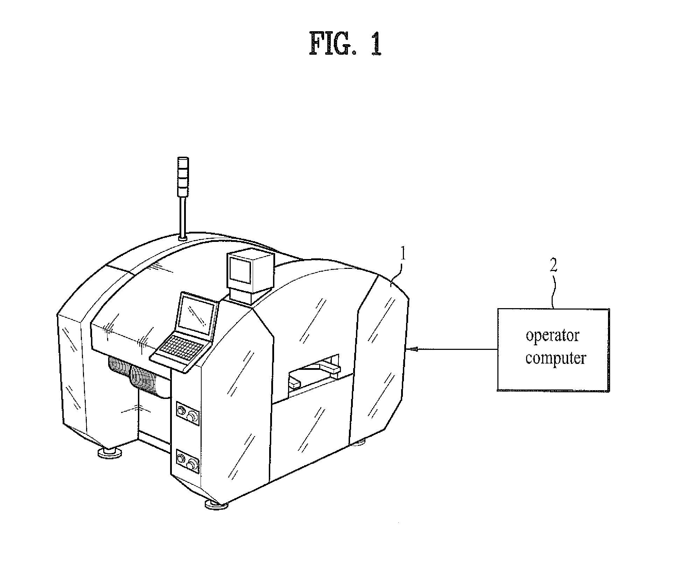

FIG. 1 is a schematic diagram of a conventional mounter that includes a machine 1 and an operator computer 2.

The machine 1 operates to mount parts on a circuit board.

The operator computer 2 controls the operation of the machine 1. An operator performs startup, driving, and maintenance-related control of the machine 1 through an operation program included in the operator computer 2.

Recently, experts who can operate and maintain the mounter are needed. However, it is difficult to separately provide mounters purely to train experts since they are very expensive.

Furthermore, when a newly developed mounter is launched on the market, users have difficulty in learning all operations of its machine and operation program.

Namely, users must fully learn how to manipulate the newly developed mounter so that they can perform proper operation and maintenance of the mounter. However, since current mounters provide only their manuals that contain their structures, functions, and manipulation methods, it takes a long time to teach users until they can skillfully operate and maintain the new mounters.

### SUMMARY OF THE INVENTION

Accordingly, the present invention is directed to a virtual education system for a mounter and a method for controlling the same that substantially obviate one or more problems due to limitations and disadvantages of the related art.

An object of the present invention is to provide a virtual education system for a mounter and a method for controlling the same, which allow users to learn skills necessary for operation and maintenance of the mounter through virtual models (for example, animation or simulation models) of the mounter.

Another object of the present invention is to provide a virtual education system for a mounter and a method for controlling the same, which provide a user manual containing structures of elements (specifically, assemblies) of the mounter, functions of the elements, and operation procedures and methods thereof and which produce virtual models (for example, animation or simulation models) representing contents of the user manual and display corresponding configurations of the mounter through the virtual models.

Another object of the present invention is to provide a virtual education system for a mounter and a method for controlling the same, which produce virtual models representing items included in the user manual, which are associated with installation and startup of the mounter, respective structures and operations of the elements of the mounter, manufacturing processes of the mounter for producing a product, and tasks in each of the manufacturing processes, and display corresponding configurations of the mounter on a screen through the virtual models.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a virtual education system for a mounter comprises a database including a first region containing user information, a second region containing contents of a user manual of the mounter, a third region containing virtual models that figure configurations of the mounter corresponding respectively to items of the user manual, and a fourth region containing commands for performing multidimensional animation or simulation of the virtual models respectively for the items of the user manual; an education program that authenticates a user with reference to the first region, provides respective contents of the items of the user manual included in the second region to the authenticated user, identifies a command corresponding to an item of the user manual when the item has been selected by the authenticated user, and performs multidimensional animation or simulation of a virtual model included in the third region corresponding to the identified command; and a display block that provides a user interface of the education program and displays the multidimensional animation or simulation of the virtual model.

Preferably, the first region contains user-specific information of the user that is used to authenticate the user.

Preferably, the second region contains files corresponding respectively to the items of the user manual. More specifically, the second region contains files corresponding respectively to items of the user manual associated with installation of the mounter, startup of the mounter, respective structures and operations of elements of the mounter, manufacturing processes of the mounter for producing a product, and tasks in each of the manufacturing processes. Preferably, the education program provides an environment for inputting operation data values for operation control of each of the elements of the mounter in each of the manufacturing processes or in each of the tasks. Accordingly, when an operation data value is input, the education program changes a motion of the virtual model during the multidimensional animation or simulation of the virtual model according to the input data value.

On the other hand, when the authenticated user has selected a file corresponding to an item of the user manual, the education program searches for a corresponding virtual model in the third region using a command corresponding to the item of the selected file.

In another aspect of the present invention, there is provided a virtual education system for a mounter used to mount parts on a circuit board using an operation program, the system comprising a database including a first database region storing files of items of a user manual, the items including an item associated with installation of the mounter, an item associated with startup of the mounter, items associated with respective structures of elements of the mounter, items associated with respective operations of elements of the mounter, items associated with manufacturing processes of the mounter for producing a product, and items associated with tasks in each of the manufacturing processes, a second database region storing respective commands of the items for activating the files of the first database region, and a third database region storing virtual models of the mounter, an animation or simulation of the virtual models being activated by the commands in the second database region; an education program that activates a file of an item associated with a command among the items stored in the first database region when the command has been selected from the commands stored in the second database region, activates an animation or simulation of a virtual model associated with the selected command among the virtual models stored in the third database region, and changes the virtual model, the animation or simulation of which has been activated, according to an operation data value that has been input to be used by the operation program for operation control of the mounter; at least one monitor that provides a graphic user interface (GUI) used to select an item of the user manual and/or a command and to input an operation data value and that displays the animation or simulation of the virtual model and a change thereof according to the input value.

Preferably, the education program searches for the virtual model associated with the selected command in the third database region.

Preferably, the first database region further stores a file of an item associated with decomposition and/or assembly of the mounter.

Preferably, the operation data value includes a value indicating the speed and width of a conveyor that conveys the circuit board, a value indicating a part pickup position of a feeder used when the part is picked up, a value indicating the size and type of a nozzle used when the part is picked up or mounted, a value indicating the position of each axis of a gantry used when the part is picked up or mounted, and a value indicating the speed of each axis of the gantry.

In another aspect of the present invention, there is provided a method for controlling a system for virtual education of a mounter that is used to mount parts on a circuit board using an operation program, the system including user-specific information for user authentication, a user manual of the mounter, and virtual models that figure configurations of the mounter corresponding respectively to items of the user manual, the method comprising authenticating a user using the user-specific information; searching for a virtual model corresponding to an item of the user manual when the authenticated user has selected the item; and performing multidimensional animation or simulation of the selected item through the found virtual model.

Preferably, the method further comprises displaying a file corresponding to the selected item.

Preferably, the method further comprises changing the virtual model during the animation or simulation of the virtual model according to an operation data value that has been input to control an operation of each element of the mounter in each manufacturing process of the mounter for producing a product or in each task in the manufacturing process.

Preferably, the method further comprises producing and storing data regarding the multidimensional animation or simulation after performing the multidimensional animation or simulation.

In another aspect of the present invention, there is provided a method for controlling a system for virtual education of a mounter that is used to mount parts on a circuit board using an operation program, the system storing files of items of a user manual, the items including an item associated with installation of the mounter, an item associated with startup of the mounter, items associated with respective structures of elements of the mounter, items associated with respective operations of elements of the mounter, items associated with manufacturing processes of the mounter for producing a product, and items associated with tasks in each of the manufacturing processes, storing respective commands of the items for activating the files of the items, and storing virtual models of the mounter, an animation or simulation of the virtual models being activated by the commands, the method comprising activating a file of an item associated with a command among the stored items when the command has been selected from the stored commands; identifying a command of the item corresponding to the activated file among the stored commands; and searching for a virtual model associated with the identified command among the stored virtual models and activating an animation or simulation of the found virtual model.

Preferably, the method further comprises changing the virtual model, the animation or simulation of which has been activated, according to an operation data value that has been input to be used for driving the mounter.

In another aspect of the present invention, there is provided a method for controlling a system for virtual education of a mounter that is used to mount parts on a circuit board using an operation program, the system including a user manual of the mounter and virtual models that figure configurations of the mounter corresponding respectively to items of the user manual, the method comprising checking whether or not an item of the user manual has been selected; searching for virtual models that represent contents of an item of the user manual when the item has been selected; and animating or simulating the contents of the selected item through the found virtual models.

Preferably, the method further comprises producing and storing data regarding the animation or simulation after performing the animation or simulation; and reproducing the stored animation or simulation data when the animation or simulation data has been selected.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic diagram of a conventional mounter;

FIG. 2 illustrates the configuration of a virtual education system for a mounter according to an embodiment of the present invention;

FIG. 3 illustrates a detailed configuration of part of the virtual education system according to the embodiment of the present invention;

FIG. 4 is a flow chart of a procedure for controlling a virtual education system for virtual education of a mounter according to a first embodiment of the present invention; and

FIG. 5 is a flow chart of a procedure for controlling a virtual education system for virtual education of a mounter according to a second embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention provides a virtual education system for a mounter according to the present invention, which previously produces and stores virtual models (for example, animation or simulation models) figuring configurations of the mounter and which provides the contents of a user manual of the mounter through the virtual models according to commands from the user. Here, the contents of the user manual are associated with structures of elements of the mounter, functions of the elements, operation procedures and methods of the mounter, installation and startup of the mounter, manufacturing processes of the mounter for producing a product, and tasks in each manufacturing process.

The present invention also provides a virtual education system for a mounter according to the present invention, which previously produces and stores respective virtual models of items included in a user manual of the mounter and activates an animation or simulation of a virtual model corresponding to an item according to a command from the user. Here, the items of the user manual include items associated with structures of elements of the mounter, functions of the elements, operation procedures and methods of the mounter, installation and startup of the mounter, manufacturing processes of the mounter for producing a product, and tasks in each manufacturing process.

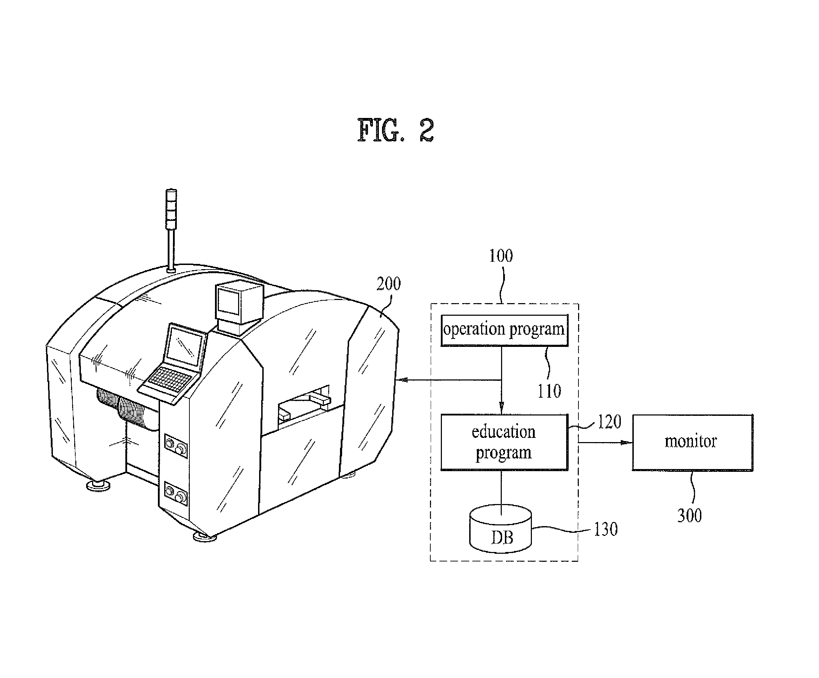

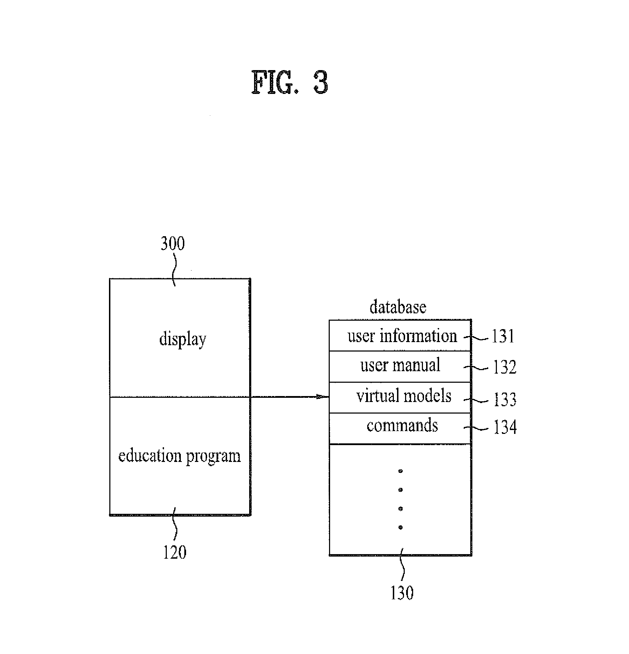

A virtual education system according to the present invention will now be described with reference to FIGs. 2 and 3.

FIG. 2 illustrates the configuration of a virtual education system for a mounter according to an embodiment of the present invention and FIG. 3 illustrates a detailed configuration of part of the virtual education system according to the embodiment of the present invention.

As shown in FIGs. 2 and 3, the virtual education system includes an operation program 110 that controls the operation of a mounter for mounting parts on a circuit board.

The virtual education system for the mounter according to the present invention further includes a database 130, an education program 120, and a monitor 300, which is a display block, for performing virtual education of a mounter for mounting parts on a circuit board through the operation program 110.

The virtual education system will now be described in more detail.

The database 130 in the virtual education system for the mounter stores information used for user authentication, user manual information used for operation and maintenance of the mounter, virtual models (animation models or simulation models) that figure configurations of a mounter to virtually show contents of a user manual, and commands used for motion control of virtual models.

More specifically, as shown in FIG. 3, the database 130 includes a user information region 131 which contains user-specific information written during user registration, a user manual region 132 which contains the contents of the user manual of the mounter, a virtual model region 133 which contains respective virtual models of items of the user manual, and a command region 134 which contains commands for activating animations or simulations of virtual models stored in the virtual model region 133.

The user information region 131 is referred to when performing user authentication.

The user manual region 132 is referred to when providing the contents of the user manual and contains files corresponding to the items of the user manual.

For example, in the present invention, the user manual stored in the user manual region 132 contains files of items associated with installation of the mounter, startup of the mounter, the respective structures and operations of the elements (specifically, assemblies) of the mounter, manufacturing processes of the mounter for producing a product, and tasks in each of the manufacturing processes. The items of the user manual stored in the user manual region 132 are classified by the type of the items. The user manual region 132 also contains files of items associated with decomposition and/or assembly of the mounter.

The command region 134 is referred to to identify a command corresponding to an item that an authenticated user has selected from items provided with reference to the user manual region 132. The commands in the command region 134 are used to perform animation or simulation of the virtual models of the items of the user manual. More preferably, the commands in the command region 134 are also used to activate the files of the items of the user manual.

The virtual model region 133 is referred to when searching for and outputting a virtual model corresponding to the identified command.

For example, the virtual model region 133 includes models of the elements (specifically, assemblies) of the mounter. Main elements of the mounter include a base frame, a circuit board transfer block (for example, a Printed Wiring Board (PWB) transfer block), a parts (or components) feeding block, and a parts positioning block.

More specifically, the base frame is a single assembly supporting the whole of the parts positioning block.

The PWB transfer block is divided into three conveyors, i.e., an inlet conveyor, a work conveyor, and an outlet conveyor. The inlet conveyor receives a PWB and then conveys the PWB to a parts mounting work position in the work conveyor. When the PWB arrives at the work position in the work conveyor, it is stopped by a stopper and then fixed at the work position by a fixing plate, a spring push-up device, a vacuum holding device, etc. When the part mounting work is finished, the outlet conveyor conveys the PWB to the next process.

The parts feeding block includes a feeder base and a feeder.

The parts positioning block includes an XY gantry, a vision system, a positioning head, an automatic nozzle changer (ANC), and nozzles. The XY gantry includes a common Y-axis slide (or a Y-frame), and two X-axis frames which are movable along the Y-axis slide. The automatic nozzle changer contains additionally required nozzles and automatically replaces a nozzle used in each positioning head with a new one as needed without stopping the system. The nozzles have various types.

The virtual model region 133 according to the present invention contains respective virtual models (animation or simulation models) of the above-mentioned elements (or assemblies) of the mounter. The models of the elements of the mounter are processed to virtually create an entire form of the mounter or operations corresponding to the items of the user manual such as manufacturing processes for producing a product and tasks in the manufacturing processes.

The virtual model region 133 of the present invention also contains virtual models of various types of nozzles and virtual models of various parts such as chips, resistors, capacitors, and transistors which are provided to the mounter to complete a product. The virtual models of the parts contained in the virtual model region 133 are classified by the types of the parts. The virtual models of the nozzles are contained in the virtual model region 133 such that virtual models of nozzles, which can be applied to the same part, are associated with each other.

As described above, the virtual education system for the mounter according to the present invention also includes the education program 120 for performing virtual education. Specifically, the education program 120 according to the present invention performs the following operations.

1. To authenticate a user with reference to the user information region 131.

2. To output respective files of items stored in the user manual region 132 in response to a request from an authenticated user.

3. To identify a command, corresponding to an item of the user manual selected by an authenticated user, with reference to the command region 134.

4. To search for a virtual model corresponding to the identified command with reference to the virtual model region 133.

5. To perform multidimensional animation or simulation of the found virtual model.

6. To control the motion of the animated or simulated virtual model according to operation data values that the operation program 110 uses to control the operation of the mounter. The present invention is implemented taking into consideration that the education program 120 operates in conjunction with the operation program 110.

However, in the present invention, it is preferable that the education program 120 operate in the same manner as the operation program 110. Specifically, when an operation data value for controlling the operation of the mounter is input, the operation program 110 controls the operation of the mounter according to the input value. Similarly, when the same value as the operation data value used to control the operation of the mounter is input, the education program 120 performs motion control of the virtual model during the multidimensional animation or simulation of the virtual model in the same manner as the operation control of the mounter performed by the operation program 110. That is, when an operation data value is input during multidimensional animation or simulation of a virtual model corresponding to a specific item, the education program 120 changes the virtual model according to the input value.

Let us consider an example in which an item corresponding to respective operations of the elements of the mounter in one of the manufacturing processes for producing a product or in a task in the process has been selected. Accordingly, the education program 120 searches for a virtual model corresponding to the selected item and performs animation or simulation of the found virtual model. The operations corresponding to the selected item, such as an operation of a feeder used to pick up or mount a part in a manufacturing process for producing a product, an operation of a conveyor for conveying a circuit board, and an operation of a nozzle or gantry performed when a part is picked up or mounted, are displayed through the animation or simulation of the virtual model. When a data value indicating the speed or width of the conveyor is input as an operation data value during the animation or simulation, the education program 120 changes the current operation or configuration of the virtual model according to the input value. If no operation data value is input during the animation or simulation, the education program 120 activates the virtual model according to default data values.

Examples of the operation data include data indicative of the size and type of a circuit board used in the manufacturing process, data indicative of the speed and width of a conveyor that conveys a circuit board, data indicative of part pickup positions of a feeder used when picking up various parts such as chips, resistors, capacitors, and transistors, data indicative of the size and type of a nozzle used when the parts are picked up and mounted, and data indicative of positions of the X, Y and Z-axes of a gantry used when the parts are picked up and mounted, and data indicative of the speed of each axis of the gantry when the parts are picked up and mounted. Without being limited to these examples, the input operation data includes any data, the value of which the operator inputs and changes to control the operation of a real mounter as needed.

We now consider another example in which an item corresponding to decomposition and/or assembly of the mounter has been selected. Accordingly, the education program 120 searches for a virtual model corresponding to the selected item and performs animation or simulation of the found virtual model. Specifically, the education program 120 performs animation or simulation of a virtual model that figures sequential operations for disassembling the mounter or sequential operations for assembling the mounter. An operation data value input during the animation or simulation includes a data value used to enlarge and display the currently animated or simulated virtual model, a data value used to reduce and display the currently animated or simulated virtual model, and a data value used to rotate and display the currently animated or simulated virtual model so that the virtual model is displayed at a different angle.

To deal with the above circumstances, the education program 120 according to the present invention provides an environment for inputting operation data values for operation control of each of the elements of the mounter in each of the manufacturing processes or in each of the tasks in the manufacturing processes. The operation data value input environment provided by the education program 120 is the same as that provided by the operation program 110.

The virtual education system according to the present invention provides a user interface of the education program 120. The virtual education system also includes a monitor 300, which is a display block for displaying a virtual model multi-dimensionally animated or simulated by the education program 120 and displaying a virtual model changed according to an input operation data value. More specifically, the monitor 300 provides a graphic user interface GUI used to select a desired item of the user manual, to select a desired command, and to input an operation data value.

When an authenticated user has selected a file corresponding to an item of the user manual, the education program 120 according to the present invention identifies a command corresponding to the selected item file and searches for a corresponding virtual model in the virtual model region 133 using the identified command. To accomplish this, the present invention stores commands and virtual models in association with each other. Accordingly, the education program 120 searches for a virtual model associated with the selected command in the virtual model region 133.

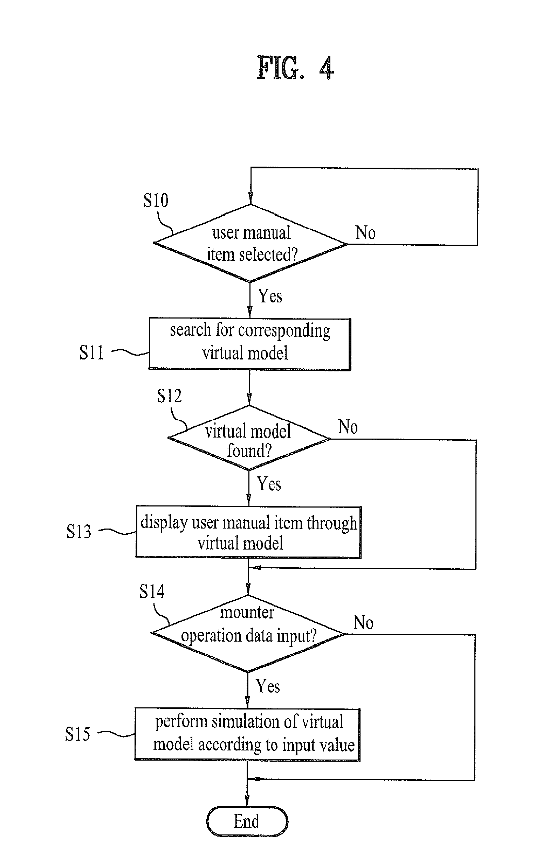

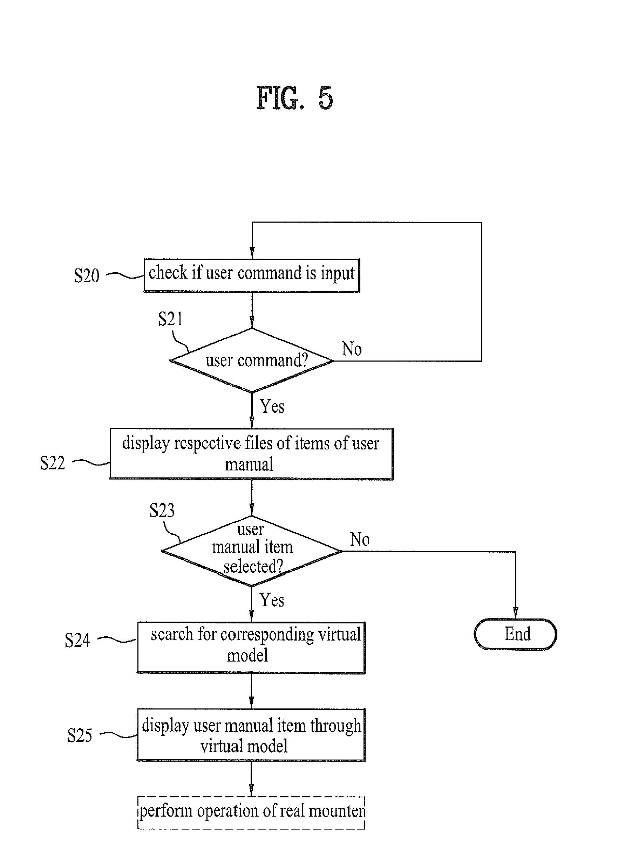

A procedure for controlling a virtual education system for virtual education of a mounter according to the present invention will now be described with reference to FIGs. 4 and 5.

FIG. 4 is a flow chart of a procedure for controlling a virtual education system for virtual education of a mounter according to a first embodiment of the present invention.

As shown in FIG. 4, first, the education program performs authentication of a user who has gained access to the virtual education system. Specifically, the education program determines whether or not the user is a registered user with reference to a region in the database in which user-specific information is stored. In the following, it is assumed that the user has been successfully authenticated.

The education program then determines whether or not the authenticated user has selected an item of the user manual (S10). If this determination is yes, the education program searches for a virtual model corresponding to the item selected by the user in a region in the database in which virtual models are stored (S11). Here, the education program also displays a file corresponding to the item selected by the user on the monitor.

If the virtual model corresponding to the selected item is found (S12), the education program displays contents of the selected item included in the user manual using the found virtual model (S13). That is, the education program activates a multidimensional animation or simulation of the selected item as the found virtual model.

When an operation data value is input during the multidimensional animation or simulation, the education program performs the multidimensional animation or simulation of the virtual model according to the input value. More specifically, the education program changes the motion of the currently animated virtual model according to the input value (S14 and S15).

In the present invention, after the animation or simulation of the virtual model of the selected item is performed, data regarding the animation or simulation results is produced and stored. Thereafter, the previously performed animation or simulation process of the item is reproduced in response to a request from a user.

FIG. 5 is a flow chart of a procedure for controlling a virtual education system for virtual education of a mounter according to a second embodiment of the present invention.

As shown in FIG. 5, first, the education program checks whether or not the user has selected and input a command (S20).

If the user has selected one of the commands stored in the database, the education program activates a file of an item associated with the selected command among a plurality of items included in the user manual and displays the item on the monitor (S21 and S22).

The education program identifies the command of the item corresponding to the activated file to determine whether or not an item in the user manual has been selected (S23).

If it is determined that an item in the user manual has been selected, the education program searches for a virtual model associated with the identified command in the stored virtual models (S24). That is, the education program searches for a virtual model corresponding to the selected item.

The education program activates an animation or simulation of the found virtual model to display the selected item in the user manual through the virtual model (S25).

Thereafter, the user operates the mounter with reference to the education content based on the virtual model based on the learning using the virtual model.

Also in the procedure of FIG. 5, when an operation data value is input for the selected item during the multidimensional animation or simulation of the virtual model, the education program performs the multidimensional animation or simulation of the virtual model according to the input value. More specifically, the education program changes the motion of the currently animated virtual model according to the input value.

As described above, in the control procedure for virtual education of the mounter according to the present invention, the virtual education system, which includes a user manual of the mounter and virtual models that figure configurations of the mounter corresponding respectively to the items of the user manual, checks whether or not an item in the user manual has been selected and searches for virtual models representing the contents of an item that has been selected and then animates or simulates the contents of the selected item through the found virtual models.

After the animation or simulation is performed through the virtual model, data regarding the animation or simulation results is produced and stored. Thereafter, when the user selects the stored data regarding the animation or simulation results, the selected data is reproduced.

As is apparent from the above description, the present invention provides a virtual education system for a mounter and a method for controlling the same which allow users to quickly learn skills necessary for operation and maintenance of the mounter, which is expensive equipment, without using the mounter.

The present invention provides the contents (specifically, items associated with structures of elements of the mounter, functions of the elements, operation procedures and methods of the mounter, installation and startup of the mounter, manufacturing processes of the mounter for producing a product, and tasks in each manufacturing process) of a user manual of the mounter through virtual models (specifically, animation or simulation models) figuring configurations of the mounter, thereby allowing users to learn skills necessary for operation and maintenance of the mounter without purchasing the expensive mounter. Here, the contents of the user manual include items associated with structures of elements of the mounter, functions of the elements, operation procedures and methods of the mounter, installation and startup of the mounter, manufacturing processes of the mounter for producing a product, and tasks in each manufacturing process.

The present invention also provides a virtual mounter system that allows users to learn skills necessary for operation and maintenance of the mounter through virtual models of the mounter, displays examples of virtual setup and operation of the mounter to provide users with operation environments of the real mounter, and displays the contents (information regarding structures and function of assemblies of the mounter and operation procedures and methods of the mounter) of the user manual of the mounter through animation or simulation models of the mounter.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A virtual education system for a mounter, the system comprising:
a database including a first region containing user information, a second region containing contents of a user manual of the mounter, a third region containing virtual models that figure configurations of the mounter corresponding respectively to items of the user manual, and a fourth region containing commands for performing multidimensional animation or simulation of the virtual models respectively for the items of the user manual;
an education program that authenticates a user with reference to the first region, provides respective contents of the items of the user manual included in the second region to the authenticated user, identifies a command corresponding to an item of the user manual when the item has been selected by the authenticated user, and performs multidimensional animation or simulation of a virtual model included in the third region corresponding to the identified command; and
a display block that provides a user interface of the education program and displays the multidimensional animation or simulation of the virtual model.

2. The virtual education system according to claim 1, wherein the first region contains user-specific information of the user that is used to authenticate the user.

3. The virtual education system according to claim 1, wherein the second region contains files corresponding respectively to the items of the user manual.

4. The virtual education system according to claim 3, wherein the second region contains files corresponding respectively to items of the user manual associated with installation of the mounter, startup of the mounter, respective structures and operations of elements of the mounter, manufacturing processes of the mounter for producing a product, and tasks in each of the manufacturing processes.

5. The virtual education system according to claim 4, wherein the education program provides an environment for inputting operation data values for operation control of each of the elements of the mounter in each of the manufacturing processes or in each of the tasks.

6. The virtual education system according to claim 5, wherein, when an operation data value is input, the education program changes a motion of the virtual model during the multidimensional animation or simulation of the virtual model according to the input data value.

7. The virtual education system according to claim 3, wherein, when the authenticated user has selected a file corresponding to an item of the user manual, the education program searches for a corresponding virtual model in the third region using a command corresponding to the item of the selected file.

8. A virtual education system for a mounter used to mount parts on a circuit board using an operation program, the system comprising:
a database including a first database region storing files of items of a user manual, the items including an item associated with installation of the mounter, an item associated with startup of the mounter, items associated with respective structures of elements of the mounter, items associated with respective operations of elements of the mounter, items associated with manufacturing processes of the mounter for producing a product, and items associated with tasks in each of the manufacturing processes, a second database region storing respective commands of the items for activating the files of the first database region, and a third database region storing virtual models of the mounter, an animation or simulation of the virtual models being activated by the commands in the second database region;
an education program that activates a file of an item associated with a command among the items stored in the first database region when the command has been selected from the commands stored in the second database region, activates an animation or simulation of a virtual model associated with the selected command among the virtual models stored in the third database region, and changes the virtual model, the animation or simulation of which has been activated, according to an operation data value that has been input to be used by the operation program for operation control of the mounter;
at least one monitor that provides a graphic user interface (GUI) used to select an item of the user manual and/or a command and to input an operation data value and that displays the animation or simulation of the virtual model and a change thereof according to the input value.

9. The virtual education system according to claim 8, wherein the education program searches for the virtual model associated with the selected command in the third database region.

10. The virtual education system according to claim 8, wherein the first database region further stores a file of an item associated with decomposition and/or assembly of the mounter.

11. The virtual education system according to claim 8, wherein the operation data value includes a value indicating the speed and width of a conveyor that conveys the circuit board, a value indicating a part pickup position of a feeder used when the part is picked up, a value indicating the size and type of a nozzle used when the part is picked up or mounted, a value indicating the position of each axis of a gantry used when the part is picked up or mounted, and a value indicating the speed of each axis of the gantry.

12. A method for controlling a system for virtual education of a mounter that is used to mount parts on a circuit board using an operation program, the system including user-specific information for user authentication, a user manual of the mounter, and virtual models that figure configurations of the mounter corresponding respectively to items of the user manual, the method comprising:
authenticating a user using the user-specific information;
searching for a virtual model corresponding to an item of the user manual when the authenticated user has selected the item; and
performing multidimensional animation or simulation of the selected item through the found virtual model.

13. The method according to claim 12, further comprising displaying a file corresponding to the selected item.

14. The method according to claim 12, further comprising changing the virtual model during the animation or simulation of the virtual model according to an operation data value that has been input to control an operation of each element of the mounter in each manufacturing process of the mounter for producing a product or in each task in the manufacturing process.

15. The method according to claim 12, further comprising producing and storing data regarding the multidimensional animation or simulation after performing the multidimensional animation or simulation.

16. A method for controlling a system for virtual education of a mounter that is used to mount parts on a circuit board using an operation program, the system storing files of items of a user manual, the items including an item associated with installation of the mounter, an item associated with startup of the mounter, items associated with respective structures of elements of the mounter, items associated with respective operations of elements of the mounter, items associated with manufacturing processes of the mounter for producing a product, and items associated with tasks in each of the manufacturing processes, storing respective commands of the items for activating the files of the items, and storing virtual models of the mounter, an animation or simulation of the virtual models being activated by the commands, the method comprising:
activating a file of an item associated with a command among the stored items when the command has been selected from the stored commands;
identifying a command of the item corresponding to the activated file among the stored commands; and
searching for a virtual model associated with the identified command among the stored virtual models and activating an animation or simulation of the found virtual model.

17. The method according to claim 16, further comprising changing the virtual model, the animation or simulation of which has been activated, according to an operation data value that has been input to be used for driving the mounter.

18. A method for controlling a system for virtual education of a mounter that is used to mount parts on a circuit board using an operation program, the system including a user manual of the mounter and virtual models that figure configurations of the mounter corresponding respectively to items of the user manual, the method comprising:
checking whether or not an item of the user manual has been selected;
searching for virtual models that represent contents of an item of the user manual when the item has been selected; and
animating or simulating the contents of the selected item through the found virtual models.

19. The method according to claim 18, further comprising:
producing and storing data regarding the animation or simulation after performing the animation or simulation; and
reproducing the stored animation or simulation data when the animation or simulation data has been selected.
